# EUROPEAN PATENT SPECIFICATION

(11) **EP 2 495 122 B1**
(45) Date of publication and mention of the grant of the patent: **27.08.2014**
(21) Application number: 12001390.9
(22) Date of filing: 01.03.2012
(51) Int. Cl.: F16D 55/36, B66F 9/075, B60K 17/04, B60T 1/06, H02K 7/102, B60K 7/00

(54) **Power transmission device and working vehicle**
Kraftübertragungsvorrichtung und Nutzfahrzeug
Dispositif de transmission de puissance et véhicule de travail

(30) Priority: 01.03.2011 JP 2011044407
(43) Date of publication of application: 05.09.2012
(73) Proprietor: Sumitomo Heavy Industries, Ltd., Tokyo 141-6025 (JP)
(72) Inventor: Yamamoto, Akira, Obu-shi Aichi 474-8501 (JP)
(74) Representative: Schmidbauer, Andreas Konrad

(56) References cited:
- EP-A1- 1 895 183
- DE-A1- 10 061 221
- US-A1- 2005 206 251
- US-A1- 2011 011 203

## Description

### BACKGROUND

### Technical Field

The present invention relates to a working vehicle, and a power transmission device that drives a wheel of the working vehicle.

### Description of the Related Art

For example, a power transmission device that drives a wheel of a forklift (working vehicle) is disclosed in the related art. The forklift described in the related art includes a motor, a speed reducer that reduces the rotational speed of the motor, and a brake mechanism that brakes the rotation of a wheel, as the power transmission device for driving a wheel. The speed reducer is constituted by a three-stage parallel shaft speed reducing mechanism. The brake mechanism is configured such that the rotor of the motor extends to the anti-load side of the motor, and a disc braking device is assembled into the rotor that extends to the anti-load side.

Additionally, a forklift with a transfer built-in wet brake that includes a speed reducer composed of a one-stage parallel shaft speed reducing mechanism and a simple planetary gear speed reducing mechanism and that has a brake mechanism arranged in the parallel shaft speed reducing mechanism is disclosed in the related art.

In the forklift, there are many accessories, such as a hydraulic pump for raising or lowering a cargo of a fork, and a tank in addition to a large-sized battery. Therefore, if a limited space is not effectively used, the whole forklift becomes large unnecessarily. Therefore, a demand for storing a power transmission device that drives a wheel in as small a space as possible (near the wheel) is strong.

On the other hand, in the case of the forklift, a fork for raising or lowering a cargo is located in front of a front wheel. Therefore, a structure in which a counterbalance (counterweight) is arranged behind the center of gravity of the forklift is adopted. In order to make the size of the counterbalance small, the center of gravity of the fork and a cargo to be loaded on the fork should be brought as close to the ground position of the front wheel as possible. In this viewpoint, the diameter of the wheel of the forklift is preferably smaller. In order to support a large weight of a cargo to be loaded on the fork in spite of this, the volume of the tire (rubber portion) of the wheel itself should be highly secured. Therefore, in actual circumstances, the space radially inside the wheel is extremely small. Therefore, the power transmission device that drives the wheel of the forklift is arranged axially outside the wheel in practice, including those described in the related art. As a result, a large accommodation space is needed.

It is desirable to reduce the space occupied by a power transmission device that drives a wheel of working vehicles including a forklift, particularly the space of the power transmission device in the axial direction of the wheel.

DE 100 61221 A1 discloses a hub drive with a hub unit and an electric motor. Between the electric motor and the hub is a reduction gear provided in the form of a two stage planet gear. A multiplate brake is located within a recess of the rotor of the electric motor.

The brake mechanism of the power transmission device of the present invention provides for a minimization of the volume occupied by the whole brake mechanism. The space occupied by the power transmission device, particularly the space occupied in axial direction of the wheel can be made small to the extent that the space radially inside the coil of the motor can be effectively utilized.

According to the present invention a power transmission device that drives a wheel of a working vehicle as set forth in claim 1 is provided. Preferred embodiments of the invention are disclosed in the dependent claims.

### BRIEF DESCRIPTION OF THE DRAWINGS

Fig. 1 is a cross-sectional view showing a configuration in which a power transmission device related to an example of an embodiment of the invention is applied to driving of a wheel of a forklift.
Fig. 2 is an enlarged cross-sectional view of essential parts in the vicinity of a brake mechanism of the power transmission device of Fig. 1.

### DETAILED DESCRIPTION

In the invention, attention is paid particularly to the arrangement of a brake mechanism in a power transmission device that drives a wheel of a working vehicle. If the brake mechanism can be assembled into, for example, the rotor of the motor, the axial dimension of the power transmission device may be shortened correspondingly. However, the radial inner space of a rotor of a motor cannot be used in a motor of a type in which magnets are embedded inside a rotor or a motor of a type using a rotor formed by stacking plate members like an induction machine, as in an IPMmotor (Interior Permanent Magnet Motor). Additionally, the design of the arrangement of the friction plates on the fixed side is difficult inside the rotor, and as a result, does not necessarily lead to reduction in the overall occupying volume of the brake mechanism.

However, in the case of a motor having a stator around which a coil is wound, a "predetermined space" is present radially inside a coil end as much as the coil overhangs from a stator body in order to wind the coil. Since the stator body itself is in a fixed state at a position radially inside the coil end, the assembling of the friction plates on the side of a fixed member and the friction plates on the side of a rotating member is relatively easy as will be described below. Therefore, a design in which multiplates are used as the friction plates is easy. For this reason, disadvantages that the radial size of the friction plates cannot be increased (in order to be stored radially inside the coil end) can be solved by using multiplates as the friction plates.

In the present invention, attention is paid to this point. The configuration having the multiplate type braking part composed of the plurality of friction plates that can make the radial dimension of the brake mechanism small is adopted, and some of at least the friction plates of the brake mechanism are arranged in a dead space radially inside the coil end.

As a result, according to the invention, the volume occupied by the whole brake mechanism can be minimized. Additionally, the occupying space of the power transmission device, particularly the occupying space in the axial direction of the wheel can be made small to the extent that the space radially inside the coil end can be effectively utilized.

In addition, the invention has been made in order to solve the problems peculiar to a forklift. When the invention is applied to the forklift, striking effects are obtained. As a result, the invented configuration can be widely applied to "working vehicles" having the same situation regarding the configuration around a wheel, and the same working effects are obtained.

According to the invention, the space occupied by a power transmission device that drives a wheel of a working vehicle, particularly the space of the power transmission device in the axial direction of the wheel can be reduced.

Hereinafter, an example of an embodiment of the invention will be described in detail with reference to the drawings.

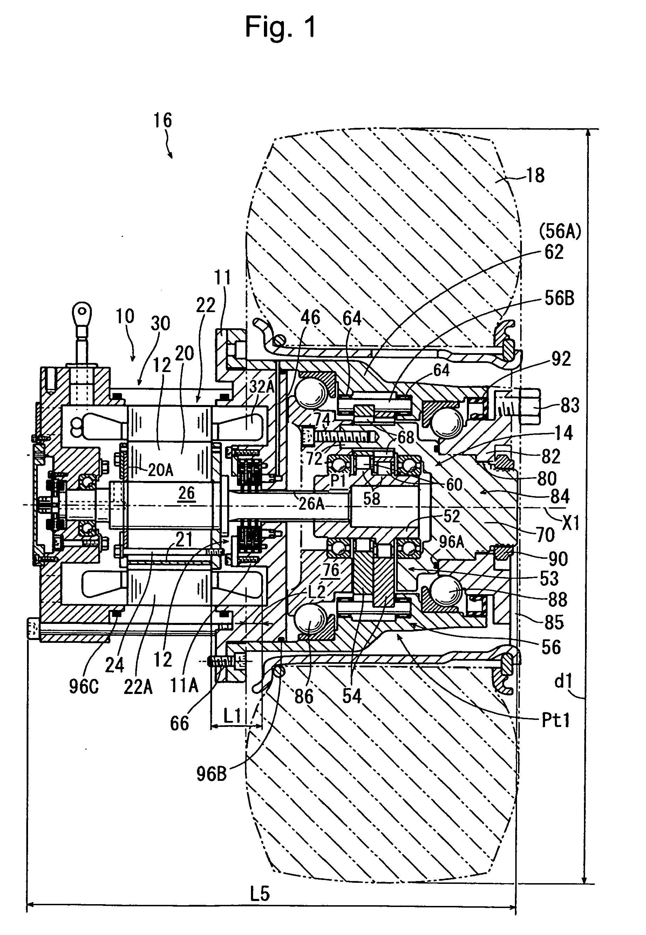

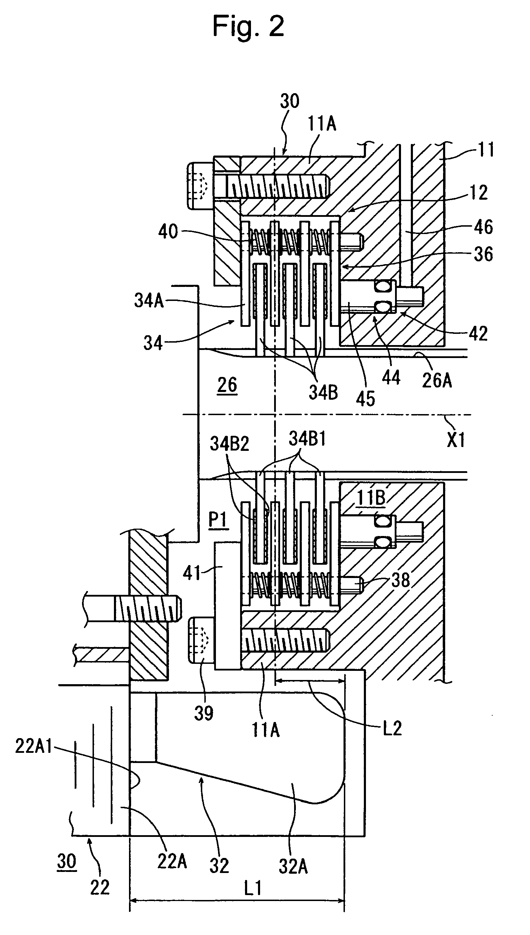

Fig. 1 is a cross-sectional view showing a configuration in which a power transmission device related to the example of the embodiment of the invention is applied to driving of a wheel of a forklift, and Fig. 2 is an enlarged cross-sectional view of essential parts in the vicinity of a brake mechanism thereof.

The power transmission device Pt1 includes an IPM motor 10, a brake mechanism 12, and a speed reducer 14, and is used to drive front wheels (wheels: only one wheel is shown in Fig. 1) 18 of a forklift (working vehicle: the whole vehicle is not shown) 16 each independently.

The IPM motor 10 has a rotor 20 and a stator 22 for extracting rotation output. The rotor 20 is formed by stacking a plurality of plates 20A, and permanent magnets 21 are embedded within the rotor 20. The IPM motor 10 in which the permanent magnets 21 are embedded within the rotor 20 has higher efficiency (smaller size and higher output) compared to an SPM motor (motor of a type in which permanent magnets are stuck on the surface of the rotor), and is suitable as a motor for driving the forklift. The plurality of plates 20A that constitute the rotor 20 is integrated by a bolt 24 and is integrated with a motor shaft (a shaft that rotates integrally with the rotor 20) 26 via an engaging portion (not shown).

Referring to Fig. 2, a stator body 22A of the stator 22 is fixed to a motor casing 30. A coil 32 for forming a magnetic field is wound around the stator body 22A. In the coil 32, a folded-back portion for winding protrudes by a dimension L1 in the axial direction from an axial end 22A1 of the stator body 22A, as a "coil end 32A". Additionally, in this embodiment, a portion of (portion shown by a dimension L2 in Figs. 1 and 2) the coil end 32A is stored radially inside the front wheel 18.

The brake mechanism 12 brakes the rotation of the motor shaft (shaft that rotates integrally with the rotor 20) 26. The brake mechanism 12 is stored radially inside the coil end 32A of the coil 32 wound around the stator 22, and includes a multiplate type braking part 36 that has the plurality of friction plates 34. In this embodiment, the whole multiplate type braking part 36 is stored radially inside the coil end 32A.

The friction plates 34 of the multiplate type braking part 36 are constituted by a plurality of (four in the illustrated example) fixed friction plates 34A and a plurality of rotational-friction plates 34B (three in the illustrated example) (multiplate configuration). The fixed friction plates 34A are assembled into a projection portion 11A of a motor cover 11 that constitutes a portion of the motor casing 30 of the IPM motor 10, is fixed in the circumferential direction by a penetration pin 38, and is made movable in the axial direction along the penetration pin 38. The penetration pin 38 is fixed and supported by a plate portion 11B of a motor cover 11, and a braking part plate 41 fixed to a tip of the projection portion 11A of the motor cover 11 via a bolt 39. A spring 40 is interposed between the fixed friction plates 34A.

On the other hand, the rotational-friction plates 34B are assembled into the motor shaft 26 side that rotates integrally with the rotor 20, and are integrally rotatable with the motor shaft 26. A spline 26A is formed along the axial direction at an outer periphery of the motor shaft 26, and inner circumferential ends 34B1 of the rotational-friction plates 34B engage with the spline 26A. Thereby, the rotational-friction plates 34B are integrated (integrally rotatable) in the circumferential direction via the motor shaft 26 and the spline 26A, and are movable along the axial direction of the motor shaft 26. Friction sheets 34B2 are adhered and fixed to the surfaces of each rotational-friction plates 34B.

A hydraulic mechanism 42 is attached to the brake mechanism 12 related to this embodiment. The hydraulic mechanism 42 includes a cylinder 44, and a piston 45 that slides within the cylinder 44. The piston 45 is located at an axial side portion of the fixed friction plates 34A, and is driven by the pressure oil supplied into the cylinder 44 via the oil passage 46 when an operator of the forklift 16 performs braking manipulation so as to allow the fixed friction plates 34A located closest to the axial load side to be pressed toward the anti-load side.

Returning to Fig. 1, the motor shaft 26 is extended to the vicinity of almost the axial center of the front wheel 18, and where the motor shaft is coupled to a hollow input shaft 52 of the speed reducer 14 via the spline 26A. The whole speed reducer 14 is stored radially inside the front wheel 18. The speed reducer 14 related to this embodiment has a planetary gear speed reducing mechanism 53 referred to as an "oscillating internal meshing type" equipped with an internal gear 56, and an external gear 54 inscribed in the internal gear 56 while oscillating. The planetary gear speed reducing mechanism 53 of the speed reducer 14 will be specifically described below.

Two eccentric bodies 58 whose axial centers deviate from the input shaft 52 are integrally formed at the input shaft 52 of the speed reducer 14. (Two) external gears 54 are oscillatably built into the outer peripheries of the eccentric bodies 58 via rollers 60, respectively. The two external gears 54 are assembled in order to secure required transmission capacity. Although both the external gears 54 each have oscillating phases that deviate from each other by 180 degrees, the external gears perform the same movement (oscillating) with respect to the input shaft 52 and the internal gear 56. The external gears 54 internally mesh with the internal gear 56 while oscillating inside the internal gear 56. The internal gear 56 is constituted by an internal gear body 56A integrated with the wheel casing 62, and outer pins 56B that constitute internal teeth. The outer pins 56B are rotatably assembled into the internal gear body 56A (wheel casing 62) via a pair of needle bearings 64. The number (the number of the outer pins 56B) of the internal teeth of the internal gear 56 is slightly more than (by one in this embodiment) the number of the external teeth of the external gears 54. In addition, the wheel casing 62 is integrated with the motor cover 11 and the motor casing 30 with a bolt 66, and is fixed to the vehicle body side (not shown) of the forklift 16.

A plurality of through holes 68 is formed in the circumferential direction in the external gears 54, respectively. Hub pins 72 that protrude in the axial direction at intervals from the hub 70 pass through (loosely fit into) the through holes 68. The hub pins 72 are integrated with a carrier body 76 with a bolt 74.

In this embodiment, the hub 70 is equivalent to an output shaft of the speed reducer 14. A hub plate 82 is connected to the hub 70 via a spline 80. The front wheel 18 is coupled to the hub plate 82 via a bolt 83 and a wheel plate 85. A large hub block 84 in which the hub plate 82, the hub 70, and the carrier body 76 are integrated constitutes an axle of the front wheel 18 as a whole. The hub block 84 is rotatably supported at the wheel casing 62 by a pair of angular ball bearings 86 and 88. In addition, reference numeral 90 designates locking slip-out preventing nuts for preventing the hub plate 82 from slipping out from the hub 70.

In this embodiment, the rotor 20 of the IPM motor 10, the motor shaft 26 that rotates integrally with the rotor 20, the friction plates 34 of the brake mechanism 12, the input shaft 52 of the speed reducer 14, the hub 70 that constitutes the output shaft of a speed reducer 14, and the hub block 84 that constitutes the axle of the front wheel 18 are all made coaxial, and are arranged around a single axis X1.

Additionally, in the present embodiment, both the IPMmotor 10 and the brake mechanism 12 are constituted by wet types, and a single space P1 in which the inside of the IPM motor 10, the brake mechanism 12, and the speed reducer 14 are sealed with an oil seal 92 (and seal rings 96A to 96C or the like) is formed (that is, the internal spaces of the IPM motor 10, the brake mechanism 12, and the speed reducer 14 communicate with each other. A single (the same) type of oil is enclosed in this space P1.

Next, the operation of the power transmission device Pt1 will be described.

When the rotor 20 of the IPM motor 10 rotates, the motor shaft 26 integrated with the rotor 20 rotates. When the motor shaft 26 rotates, the input shaft 52 of the speed reducer 14 connected via the spline 26A of this motor shaft 26 rotates. As a result, the eccentric bodies 58 integrally formed at the outer periphery of the input shaft 52 rotate eccentrically, the external gears 54 oscillate via the rollers 60, and the external gears 54 internally mesh with the internal gear 56 inside the internal gear 56.

In this embodiment, the number of the external teeth of the external gears 54 is slightly fewer than (by one in this embodiment) the number (the number of the outer pins 56B) of the internal teeth of the internal gear 56, and the internal gear body 56A is integrated with the wheel casing 62 to maintain a fixed state. For this reason, whenever the external gears 54 oscillate once (the input shaft 52 rotates once), the external gears shift (rotate) in phase by one tooth with respect to the internal gear 56. As for the movement of the external gears 54, the oscillating components of the external gears are absorbed by a gap between the through holes 68 of the external gears 54 and the hub pins 72, and, only rotation components thereof are extracted from the hub 70 (and the carrier body 76) via the hub pins 72. The rotation of a hub 70 is transmitted to the hub plate 82 via the spline 80, and is transmitted to the front wheel 18 via the bolt 83 and the wheel plate 85.

Here, the operation of the brake mechanism 12 will be described with reference to Fig. 2.

If the operator of the forklift 16 performs braking manipulation, pressure oil is supplied into the cylinder 44 via the oil passage 46 of the hydraulic mechanism 42, and the piston 45 moves (leftward in Fig. 2) inside the cylinder 44. As a result, the fixed friction plate 34A located closest to the load side is pushed by the piston 45 and moves to the anti-load side in the axial direction. Then, the spring 40 is compressed, and the plurality of fixed friction plates 34A and rotational-friction plates 34B are brought into contact with each other by a strong force one after another. The fixed friction plates 34A are assembled into the motor cover 11 (in a fixed state), and are fixed in the circumferential direction via the penetration pin 38, and the rotational-friction plates 34B are assembled into the motor shaft 26, and are integrated with the motor shaft 26 in the circumferential direction via the spline 26A. Therefore, as the fixed friction plates 34A and the rotational-friction plates 34B are strongly brought into contact with the friction sheets 34B2 (adhered and fixed to the rotational-friction plates 34B), the braking action of the motor shaft 26 is exerted.

Since the supply of the pressure oil into the cylinder 44 is stopped if the operator stops the braking manipulation, each fixed friction plate 34A returns to its original axial position (before the braking manipulation is made) due to the restoring force of the spring 40. Accordingly, the rotational-friction plates 34B also return to their original axial positions, and the contact between the fixed friction plates 34A and the rotational-friction plates 34B is released to stop braking.

According to the power transmission device Pt1 related to this embodiment, the brake mechanism 12 has the multiplate type braking part 36 composed of the plurality of friction plates 34, and all the plurality of friction plates 34 are stored radially inside the coil end 32A of the coil 32 of the IPM motor 10. For this reason, the brake mechanism 12 can be stored within an extremely small space within the coil end 32A, while securing a required braking force even in the friction plates 34 with small diameter due to themulti-plate configuration. As a result, a portion of the IPM motor 10 and the brake mechanism 12 can be stored in the inner space of the front wheel 18 of the forklift 16 that has a configuration in which the inner space of the front wheel 18 is small, and the vehicle-body-side space of the forklift 16 can be more widely secured. That is, as the IPM motor 10 having high output and small size is adopted as a drive source, the occupying space of the power transmission device Pt1, particularly its axial dimension L5 can be shortened.

Since the space within the coil end 32A is also close to the motor cover 11 that is a fixing member (constitutes a portion of the motor casing 30) and the motor shaft 26 that rotates integrally with the rotor 20 that is a member to be braked, and both the fixed friction plates 34A and the rotational-friction plates 34B are easily arranged in the space, a positional advantage that the multiplate configuration is easily adopted can also be obtained to a great extent. Above all, since the rotor 20 of the IPM motor 10 is configured such that the plates 20A are stacked, and the permanent magnet is embedded in the rotor 20, the effect that the space within the IPMmotor 10 can be effectively used is great despite of a structure in which the space within the rotor 20 cannot be used.

According to the present embodiment, the occupying space of the power transmission device Pt1 can be made small. Accordingly, the space for other accessory equipment indispensable to the forklift 16, for example, accessory equipment such as a hydraulic pump and a tank for driving a fork (not shown), or a battery can be secured to a greater extent. When the space for accessory equipment is the same and favorable, the size of the overall forklift can be made smaller.

Additionally, in the above embodiment, instead of the three-stage parallel shaft speed reducing mechanism, or multi-stage speed reducing mechanism in which a parallel shaft speed reducing mechanism and a simple planet speed reducing mechanism are combined together and a plurality of rotating shafts is present, which are adopted in the related art, the configuration including only the one-stage oscillating internal meshing type planetary gear speed reducing mechanism 53 is adopted as the speed reducing mechanism of the speed reducer 14. For this reason, all of the rotor 20 of the IPM motor 10, the motor shaft 26 that rotates integrally with the rotor 20, the friction plates 34 of the brake mechanism 12, the input/output shafts 52 and 70 of the speed reducer 14, and the hub block 84 (axle) of the wheel 18 can be arranged around the same axis X1, and all of the IPM motor 10, the brake mechanism 12, the speed reducer 14, and the hub block 84 can be stored in the radial dimension that is almost the same as the external diameter of the motor casing 30 of the IPM motor 10. As a result, reduction in the diameter d1 of the front wheel 18 is realized. In the forklift 16, the distance from the ground position of the front wheel 18 to the center of gravity of a cargo on a fork can be significantly shortened if the diameter dl of the front wheel 18 can be reduced. Therefore, there is obtained a great advantage that the weight of the counterbalance can be made smaller while securing the loading weight of the same fork.

Additionally, in this embodiment, awettypebrakemechanism is used as the brake mechanism 12, and the advantage that all of the friction plates 34 of the brake mechanism 12 can be stored radially inside the coil end 32A is also significant. Moreover, a wet type IPM motor is also used as the IPM motor 10 as well as the brake mechanism 12, and the same (single) space P1 is used as the respective spaces within the IPM motor 10, the brake mechanism 12, and the speed reducer 14, and the same oil is enclosed in the same space P1. Therefore, a wall member for partitioning off the respective spaces is unnecessary, and this point also contributes to weight reduction and reduction in dimensions. Additionally, since the number of the oil seals 92 (that is, the number of locations to be sealed) also decreases, not only the number of parts can be reduced, but also the locations that cause oil leakage can be reduced. Accordingly, maintenance becomes very easy. Additionally, since a large amount of oil is enclosed in a large space, a cooling effect is also high.

In addition, in the above embodiment, the IPM motor is adopted as a motor. However, for example, even in an SPM motor of a stacked rotor, an induction motor, or the like in addition to the IPM motor, there is a situation where it is difficult to utilize the inside of the rotor. An advantage in terms of space can be obtained by applying the invention. Additionally, the motor of the invention may be a motor in which it is difficult to utilize the inside of the rotor, and is not limited to the motor of a stacked rotor.

Additionally, in the above embodiment, the one-stage oscillating internal meshing type planetary gear speed reducing mechanism is adopted as a speed reducing mechanism of a speed reducer. However, the speed reducing mechanism of the speed reducer related to the invention is not particularly limited. For example, a simple planetary gear speed reducing mechanism and a parallel shaft speed reducing mechanism may be adopted, or a combination thereof may be adopted. That is, the one-stage speed reducing mechanism in which the input shaft and the output shaft are coaxial is not necessarily adopted, and a multi-shaft or multi-stage speed reducing mechanism may be adopted.

Additionally, in the above embodiment, all the friction plates are stored radially inside the coil end of the motor. However, a configuration in which some of the friction plates are stored in the coil end may be stored. On the contrary, a configuration in which portions other than the friction plates, for example, a portion of a hydraulic cylinder part is stored within the coil end may be adopted.

Additionally, in the above embodiment, a portion of the coil end of the motor is stored radially inside the wheel. However, the whole coil end may be stored radially inside the wheel. However, in the invention, the coil end of the motor is not necessarily stored inside the wheel. The whole coil end may be arranged outside the wheel.

Additionally, in the above embodiment, oil is enclosed in all of the motor, the brake mechanism, and the speed reducer, and all the three components are of wet types. However, the brake mechanism and the motor may be of dry types. Moreover, in the above embodiment, the configuration in which the internal spaces of the motor, the brake mechanism, and the speed reducer communicate with each other, and the same oil is enclosed is adopted. However, two or three of these components may be stored in separate spaces, respectively. In this case, oil having optimal characteristics can be enclosed in each space.

Additionally, in the above embodiment, all of the rotor of the motor, the shaft that rotates integrally with the rotor, the friction plates of the brake mechanism, the input/output shafts of the speed reducer, and the rotating shaft of the wheel are coaxially arranged. However, this coaxial arrangement is not necessarily an indispensable configuration in the invention (the axial centers of the respective components may deviate).

The invention can obtain the most striking effect when being applied to the forklift. However, even in various working vehicles on which, for example, working machines for construction, for engineering works, or for conveyance other than the forklift are mounted, a desire for making the external diameter of a wheel small, but greatly securing the volume of a tire portion (rubber portion) in order to deal with a large weight of a cargo or earth and sand exists similarly. Even in these working machines, the same working effects that the brake mechanism of the power transmission device and a portion of the motor can be efficiently stored radially inside a wheel with a small diameter can be obtained by applying the invention. Accordingly, targets to which the invention is applied are not limited only to the forklift.

Additionally, among working vehicles, there are a number of working vehicles that travel on a crawler instead of wheels, for example like a hydraulic excavator that is a construction machine. The difference between the wheel driving and the crawler driving is not an essential difference in the invention, and the invention can be applied to both of the driving types. Accordingly, the concept of "driving the crawler" is included in the concept of "driving the wheel" of the invention.
It should be understood that the invention is not limited to the above-described embodiment, but may be modified into various forms within the scope of the claims.

## Claims

1. A power transmission device (Ptl) that drives a wheel of a working vehicle, the device comprising:
a motor (10) having a rotor (20) for extracting rotation output and a motor shaft (26), said motor further having a stator (22) around which a coil (32) for forming a magnetic field is wound; and
a brake mechanism (12) that brakes the rotation of said motor shaft (26) that rotates integrally with the rotor (20),
wherein the brake mechanism (12) includes a multiplate type braking part composed of a plurality of friction plates (34) and
an end face of the rotor (20) faces to the friction plates in the axial direction, and
some of the friction plates (34) are stored radially inside a coil end of the coil (32), the friction plates (34) of the multiplate type braking part (36) are constituted by a plurality of fixed friction plates (34A) and a plurality of rotational-friction plates (34B),
wherein the rotational-friction plates (34B) are integrally rotatable with the motor shaft via a spline (26A) on the outer circumference of the motor shaft (26).

2. The power transmission device according to Claim 1, wherein the rotor (20) is formed by stacking plates.

3. The power transmission device according to Claim 1 or claim 2, wherein a permanent magnet (21) is embedded within the rotor (20).

4. The power transmission device according to any of claim 1 to Claim 3,
further comprising a speed reducer (14) which reduces the rotation of the shaft (52) that rotates integrally with the rotor,
wherein the brake mechanism (12) is of a wet type, and
oil is enclosed in all of the motor (10), the brake mechanisms (12), and the speed reducer (14).

5. The power transmission device according to Claim 4,
wherein internal spaces of the motor (10), the brake mechanism (12), and the speed reducer (14) communicate with each other, and the same oil is enclosed therein.

6. The power transmission device according to Claim 1,
wherein all the plurality of friction plates (34) are stored radially inside the coil end (32A).

7. The power transmission device according to Claim 1,
wherein the rotor (20) of the motor (10), the shaft that rotates integrally with the rotor (20), the friction plates (34) of the brake mechanism (12) that brakes the shaft, and the input/output shafts of the speed reducer (14) are all arranged coaxially.

8. The power transmission device according to Claim 1, further comprising a speed reducer (14) that reduces the speed of the rotation of the shaft that rotates integrally with the rotor,
wherein a speed reducing mechanism of the speed reducer includes an one-stage oscillating internal meshing type planetary gear speed reducing mechanism in which an external gear internally meshes with an internal gear while oscillating inside the internal gear, and the input shaft and the output shaft are coaxial.

9. A working vehicle comprising the power transmission device according to Claim 1,
wherein at least a portion of the coil end (32A) of the motor is stored radially inside the wheel.

10. The working vehicle according to Claim 9, further comprising a speed reducer (14) that reduces the speed of the rotation of the shaft (51) that rotates integrally with the rotor and has the coaxial input shaft and output shaft,
wherein the rotor (20) of the motor (10), the shaft that rotates integrally with the rotor, the friction plates (34) of the brake mechanism, the input/output shafts of the speed reducer (14), and the axle of the wheel are all arranged coaxially.

## Patentansprüche

1. Leistungsübertragungsvorrichtung (Ptl), welche ein Rad eines Arbeitsfahrzeugs antreibt, wobei die Vorrichtung folgendes aufweist:
einen Motor (10) mit einem Rotor (20) zum Herausführen einer Rotationsausgabe, und mit einer Motorwelle (26), wobei der Motor weiter einen Stator (22) hat, um den eine Wicklung (32) zum Bilden eines Magnetfeldes gewickelt ist; und
einen Bremsmechanismus (12), der die Drehung der Motorwelle (26) bremst, welche sich integral mit dem Rotor (20) dreht,
wobei der Bremsmechanismus (12) einen Mehrscheibenbremsteil aufweist, der aus einer Vielzahl von Reibplatten (34) aufgebaut ist, und wobei eine Endstirnseite des Rotors (20) in axialer Richtung zu den Reibplatten weist, und
wobei einige der Reibplatten (34) radial innerhalb eines Wicklungsendes der Wicklung (32) aufgenommen sind, wobei die Reibplatten (34) des Mehrscheibenbremsteils (36) durch eine Vielzahl von festen Reibplatten (34A) und eine Vielzahl von Drehreibplatten (34B) gebildet wird,
wobei die Drehreibplatten (34B) integral mit der Motorwelle durch eine Keilwelle (26A) am Außenumfang der Motorwelle (26) drehbar sind.

2. Leistungsübertragungsvorrichtung nach Anspruch 1, wobei der Rotor (20) durch gestapelte Platten geformt ist.

3. Leistungsübertragungsvorrichtung nach Anspruch 1 oder 2, wobei ein Permanentmagnet (21) in dem Rotor (20) eingebettet ist.

4. Leistungsübertragungsvorrichtung nach einem der Ansprüche 1 bis 3, die weiter eine Drehzahluntersetzungsvorrichtung (14) aufweist, welche die Drehung der Welle (52) untersetzt, welche sich integral mit dem Rotor dreht,
wobei der Bremsmechanismus (12) eine Nassscheibenbauart ist, und
wobei Öl in der Gesamtheit des Motors (10), der Bremsmechanismus (12) und der Drehzahluntersetzungsvorrichtung (14) eingeschlossen ist.

5. Leistungsübertragungsvorrichtung nach Anspruch 4, wobei Innenräume des Motors (10), des Bremsmechanismus (12) und der Drehzahluntersetzungsvorrichtung (14) miteinander in Verbindung stehen und das gleiche Öl darin eingeschlossen ist.

6. Leistungsübertragungsvorrichtung nach Anspruch 1, wobei alle der Vielzahl von Reibplatten (34) radial innerhalb des Wicklungsendes (32A) aufgenommen sind.

7. Leistungsübertragungsvorrichtung nach Anspruch 1, wobei der Rotor (20) des Motors (10), die Welle, die sich integral mit dem Rotor (20) dreht, die Reibplatten (34) des Bremsmechanismus (12) der die Welle bremst, und die Eingangs/Ausgangswellen der Drehzahluntersetzungsvorrichtung (14) alle koaxial angeordnet sind.

8. Leistungsübertragungsvorrichtung nach Anspruch 1, die weiter eine Drehzahluntersetzungsvorrichtung (14) aufweist, welche die Drehgeschwindigkeit der Welle reduziert, die sich integral mit dem Rotor dreht, wobei ein Drehzahluntersetzungsmechanismus der Drehzahluntersetzungsvorrichtung einen einstufigen Planetendrehzahluntersetzungsmechnismus der inneneingreifenden oszillierenden Bauart aufweist, wobei ein außen verzahntes Zahnrad von innen mit einem innen verzahnten Zahnrad in Eingriff steht, während es sich oszillierend innerhalb des innen verzahnten Zahnrades bewegt, und wobei die Eingangswelle und die Ausgangswelle koaxial sind.

9. Arbeitsfahrzeug, welches die Leistungsübertragungsvorrichtung nach Anspruch 1 aufweist, wobei zumindest einen Teil des Wicklungsendes (32A) des Motors radial innerhalb des Rades aufgenommen ist.

10. Arbeitsfahrzeug nach Anspruch 9, welches weiter eine Drehzahluntersetzungsvorrichtung (14) aufweist, welche die Drehgeschwindigkeit der Welle (51) reduziert, welche sich integral mit dem Rotor dreht, und die eine koaxiale Eingangswelle und Ausgangswelle aufweist,
wobei der Rotor (20) des Motors (10) die Welle, die sich integral mit dem Rotor dreht, die Reibplatten (34) des Bremsmechanismus, die Eingangs/Ausgangswellen der Drehzahluntersetzungsvorrichtung (14) und die Achse des Rades alle koaxial angeordnet sind.

## Revendications

1. Dispositif de transmission de puissance (Pt1) qui entraîne une roue d'un engin de chantier, le dispositif comprenant :
un moteur (10) muni d'un rotor (20) pour extraire une sortie de rotation et d'un arbre moteur (26), le moteur comprenant en outre un stator (22) autour duquel un enroulement (32)de formation d'un champ magnétique est enroulé ; et
un mécanisme de frein (12) qui freine la rotation de l'arbre moteur (26) qui tourne solidairement avec le rotor (20),
dans lequel le mécanisme de frein (12) comprend une pluralité de pièces de freinage du type à plusieurs plaques constituées d'une pluralité de plaques de friction (34) et dans lequel une face d'extrémité du rotor (20) fait face aux plaques de friction dans la direction axiale, et
certaines des plaques de friction (34) étant stockées radialement à l'intérieur d'une extrémité de l'enroulement (32), les plaques de friction (34) de la pièce de freinage de type à plusieurs plaques (36) étant constituées d'une pluralité de plaques de friction fixes (34A) et d'une pluralité de plaques de friction tournantes (34B),
dans lequel les plaques de friction tournantes (34B), peuvent tourner par l'intermédiaire d'une cannelure (26A) sur la circonférence externe de l'arbre moteur (26).

2. Dispositif de transmission de puissance selon la revendication 1, dans lequel le rotor (20) est constitué de plaques empilées.

3. Dispositif de transmission de puissance selon la revendication 1 ou 2, dans lequel un aimant permanent (21) est logé dans le rotor (20).

4. Dispositif de transmission de puissance selon l'une des quelconques des revendications 1 à 3,
comprenant en outre un réducteur de vitesse (14) qui réduit la rotation de l'arbre (52) qui tourne de façon solidaire du rotor,
dans lequel le mécanisme de frein (12) est de type humide, et de l'huile est logée dans l'ensemble du moteur (10), du mécanisme de frein (12), et du réducteur de vitesse (14).

5. Dispositif de transmission de puissance selon la revendication 4, dans lequel des espaces internes du moteur (10), du mécanisme de frein (12), et du réducteur de vitesse (14) communiquent les uns avec les autres, et la même huile y est enfermée.

6. Dispositif de transmission de puissance selon la revendication 1, dans lequel toutes les plaques de friction (34) sont stockées radialement dans l'extrémité d'enroulement (32A).

7. Dispositif de transmission de puissance selon la revendication 1, dans lequel le rotor (20) du moteur (10), l'arbre qui tourne solidairement avec le rotor (20), les plaques de friction (34) du mécanisme de frein (12) qui freine l'arbre, et les arbres d'entrée/sortie du réducteur de vitesse (14) sont tous disposés coaxialement.

8. Dispositif de transmission de puissance selon la revendication 1, comprenant en outre un réducteur de vitesse (14) qui réduit la vitesse de rotation de l'arbre qui tourne solidairement du rotor,
dans lequel un mécanisme de réduction de vitesse du réducteur de vitesse comprend un mécanisme de réduction de vitesse à planétaire du type à engrenage interne, oscillant, à un seul étage, dans lequel un pignon externe s'engrène solidairement avec un pignon interne tandis qu'il se produit une oscillation dans le pignon interne, et dans lequel l'arbre interne et l'arbre externe sont coaxiaux.

9. Engin de chantier comprenant le dispositif de transmission de puissance selon la revendication 1,
dans lequel au moins une partie de l'extrémité d'enroulement (32A) du moteur est stockée radialement à l'intérieur de la roue.

10. Engin de chantier selon la revendication 9, comprenant en outre un réducteur de vitesse (14) qui réduit la vitesse de rotation d'un arbre (51) qui tourne solidairement du rotor et a un arbre d'entrée et un arbre de sortie coaxiaux,
dans lequel le rotor (20) du moteur (10), l'arbre qui tourne solidairement avec le rotor, les plaques de friction (34) du mécanisme de frein, les arbres d'entrée/sortie du réducteur de vitesse (14), et l'axe de la roue sont tous disposés coaxialement.
